(19) Europäisches Patentamt
European Patent Office
Office européen des brevets

(11) EP 3 722 356 B1

(12) EUROPEAN PATENT SPECIFICATION

(45) Date of publication and mention of the grant of the patent:
**12.02.2025 Bulletin 2025/07**

(21) Application number: **18885897.1**

(22) Date of filing: **27.11.2018**

(51) International Patent Classification (IPC):
***C08G 59/38*** *(2006.01)* ***C08G 59/68*** *(2006.01)*
***C08L 63/04*** *(2006.01)* ***B29C 43/12*** *(2006.01)*
***C08G 59/32*** *(2006.01)* ***C08G 59/40*** *(2006.01)*
***C08J 5/24*** *(2006.01)*

(52) Cooperative Patent Classification (CPC):
**C08G 59/4021; C08G 59/3218; C08G 59/38; C08G 59/686; C08J 5/243; C08L 63/04;**
B29C 43/12; C08J 2363/00

(86) International application number:
**PCT/JP2018/043481**

(87) International publication number:
**WO 2019/111747 (13.06.2019 Gazette 2019/24)**

# (54) PREPREG AND FIBER-REINFORCED COMPOSITE MATERIAL

PREPREG UND FASERVERSTÄRKTES VERBUNDMATERIAL

PRÉIMPRÉGNÉ ET MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2017 JP 2017232356**

(43) Date of publication of application:
**14.10.2020 Bulletin 2020/42**

(73) Proprietor: **Toray Industries, Inc.**
**Tokyo 103-8666 (JP)**

(72) Inventors:
- **SANO, Kentaro**
  **Iyo-gun**
  **Ehime 791-3193 (JP)**
- **KURODA, Taiki**
  **Iyo-gun**
  **Ehime 791-3193 (JP)**
- **UCHIDA, Hiroyuki**
  **Iyo-gun**
  **Ehime 791-3193 (JP)**
- **KAMAE, Toshiya**
  **Iyo-gun**
  **Ehime 791-3193 (JP)**

(74) Representative: **Kador & Partner Part mbB**
**Corneliusstraße 15**
**80469 München (DE)**

(56) References cited:
**JP-A- 2002 284 852**
**JP-A- 2010 248 479**
**JP-A- 2013 166 917**
**JP-A- 2013 253 194**
**JP-A- H0 776 616**
**JP-A- H0 776 616**
**JP-A- H11 209 580**
**JP-B2- 5 229 252**
**US-A1- 2015 098 833**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 722 356 B1

## Description

### TECHNICAL FIELD

The present invention relates to a prepreg and a fiber-reinforced composite material, which are suited for sports applications and general industrial applications.

### BACKGROUND ART

Epoxy resins are widely used in various industrial fields including coating materials, adhesives, electric and electronic information materials, advanced composite materials and the like by making use of their excellent mechanical properties. Particularly, the epoxy resin is often used in applications of fiber-reinforced composite materials composed of reinforcing fibers such as carbon fibers, glass fibers and aramid fibers, and a matrix resin.

In the production of the carbon fiber-reinforced composite material, a prepreg in which a carbon fiber substrate is impregnated in advance with an epoxy resin is often used. A molded article is obtained by laminating or preforming the prepreg, followed by heating to cure an epoxy resin. When a curing reaction proceeds during a process to lamination, handling property of the prepreg deteriorates. Therefore, the epoxy resin used for the prepreg is required to have high storage stability, and dicyandiamide having excellent latent curability is widely used as a curing agent.

The carbon fiber composite material is used in a wide field ranging from sports and leisure applications to industrial applications of motor vehicles and aircraft by making use of its features such as lightweight, high strength and high rigidity. Particularly, in recent years, there is increasing the number of cases where not only the carbon fiber composite material is used as a structural member, but also the carbon fiber woven fabric is arranged on a surface and texture of cloth is used as a design. Therefore, a cured product of the epoxy resin to be used as a matrix resin is required to exhibit excellent heat resistance and mechanical property of material, and low color of the cured product and the appearance of the molded article also become more highly valued. However, there was a problem that use of dicyandiamide as the curing agent may cause white spots on a surface of the molded article, leading to deterioration of the appearance.

Patent Document 1 discloses, as a method in which white spots originating from dicyandiamide are suppressed, a technique in which dicyandiamide and an epoxy resin are dissolved or compatibilized when a substrate is impregnated with them by using a masterbatch of dicyandiamide having a small particle diameter, thus suppressing white spots of a prepreg. Patent Document 2 discloses, as a method using no dicyandiamide, a technique in which polythiol and a urea compound are used as the curing agents, and Patent Document 3 discloses a technique in which an acid anhydride is used as the curing agent. Patent Document 4 discloses a prepreg comprising an epoxy resin composition containing two types of epoxy resins, a combination of an aromatic urea and dicyandiamide as the curing agent composition, and reinforcing fibers. Patent Document 4 teaches to use carbon black to improve the appearance.

### PRIOR ART DOCUMENTS

### PATENT DOCUMENTS

Patent Document 1: JP 11-209580 A
Patent Document 2: JP 2013-253194 A
Patent Document 3: JP 2013-133407 A
Patent Document D4: JP 2013-166917 A

### SUMMARY OF THE INVENTION

### PROBLEMS TO BE SOLVED BY THE INVENTION

However, in the method mentioned in Patent Document 1, since dicyandiamide is dissolved or compatibilized during fabrication of the prepreg, the storage stability was insufficient as the prepreg for the fiber-reinforced composite material. When dicyandiamide is not dissolved during fabrication of the prepreg, white spots may be generated on the surface of the molded article.

In Patent Document 2, white spots are not generated on the surface of the molded article because of using no dicyandiamide, the heat resistance and the mechanical property of material of the cured resin may be insufficient.

When the acid anhydride as the curing agent proposed in Patent Document 3 is used, white spots are not generated on the surface of the molded article. However, the acid anhydride as the curing agent may deteriorate due to

moisture in the air, leading to deterioration of physical properties of the cured resin, so that the technique was unsuitable for use in the prepreg for the fiber-reinforced composite material which is considered to be stored for a fixed period of time.

The prepreg is often stored in a frozen state to prevent deterioration, and is commonly thawed after every use. When freezing and thawing are repeated, frost may adhere to the prepreg, leading to mixing of moisture into the prepreg. In applications where the appearance of the molded article is highly valued, the prepreg may be shaped and bagged in a mold having a complicated shape, followed by curing in an autoclave. In this case, moisture contained in the mold or a subsidiary material may evaporate during a curing process, leading to mixing of moisture into the prepreg. When the prepreg is cured in a state where moisture is mixed therein, the heat resistance of the cured product may deteriorate, thus causing a problem in applications where the appearance is highly valued.

One object of the present invention is to ameliorate the disadvantages of the prior arts and thus to provide a prepreg which achieves both high heat resistance and low color and does not cause white spots on the surface of a molded article, and is capable of obtaining a fiber-reinforced composite material having excellent appearance and is also capable of obtaining a fiber-reinforced composite material having high heat resistance even when curing is performed under the condition where moisture can be mixed therein. Another object of the present invention is to provide a fiber-reinforced composite material having high heat resistance and excellent appearance.

SOLUTIONS TO THE PROBLEMS

The present inventors have conducted intensive investigations to solve the above-mentioned problems, as a result, found out a prepreg having the following configuration, and thus completed the present invention. In other words, the present invention consists of the following configuration.

A prepreg comprising an epoxy resin composition containing [A] an epoxy resin and [B] a curing agent, and a reinforcing fiber, wherein the epoxy resin composition satisfies the following conditions (a) to (e):

(a) [A1] an epoxy resin represented by the general formula (I) is contained as the epoxy resin [A] in an amount of 50 to 100 parts by mass in 100 parts by mass of the entire epoxy resin, and [A1'] an epoxy resin satisfying an inequality: $n \geq 2$ among the component [A1] is contained in an amount of 50 to 80 parts by mass in 100 parts by mass of the entire epoxy resin;

[Chem. 1]

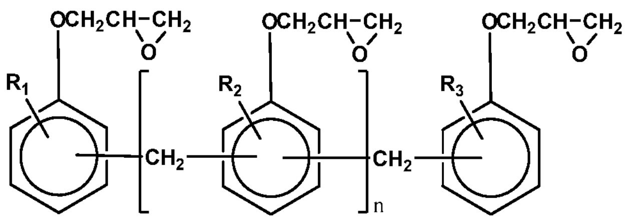

...(1)

wherein, in the general formula (I), $R_1$, $R_2$ and $R_3$ each independently represent a hydrogen atom or a methyl group, and n represents an integer of 1 or more;

(b) the entire epoxy resin has an average epoxy equivalent of 165 to 265 g/eq;

(c) a water absorption coefficient as determined when the epoxy resin composition is stored in an atmosphere at 85°C and 95%RH for 2 hours is 3.0% by mass or less based on 100% by mass of the epoxy resin composition;

(d) [B1] an aromatic urea is contained as [B] a curing agent; and

(e) the content of [B2] dicyandiamide of the curing agent [B] is 0.5 part by mass or less based on 100 parts by mass of the entire epoxy resin.

Moreover, a fiber-reinforced composite material of the present invention is a fiber-reinforced composite material comprising the above prepreg being cured.

EFFECTS OF THE INVENTION

According to the present invention, it is possible to provide a prepreg which achieves both high heat resistance and low color and does not cause white spots on the surface of a molded article, and is capable of obtaining a fiber-reinforced composite material having excellent appearance and is also capable of obtaining a fiber-reinforced composite material having high heat resistance even when curing is performed under the condition where moisture can be mixed therein.

EMBODIMENTS OF THE INVENTION

<Component [A]>

The component [A] in the present invention is an epoxy resin. Examples of the epoxy resin include a bisphenol type epoxy resin, a biphenyl type epoxy resin, a naphthalene type epoxy resin, a novolac type epoxy resin, an epoxy resin having a fluorene skeleton, an epoxy resin having an oxazolidone ring, an epoxy resin in which a phenol compound and a copolymer of dicyclopentadiene are used as raw materials, a glycidyl ether type epoxy resin such as diglycidylresorcinol, tetrakis(glycidyloxyphenyl)ethane or tris(glycidyloxyphenyl)methane, a glycidyl amine type epoxy resin such as tetraglycidyldiaminodiphenylmethane, triglycidylaminophenol, triglycidylaminocresol or tetraglycidylxylenediamine, and the like.

In the present invention, it is required to contain, as the component [A], [A1] an epoxy resin represented by the general formula (I), and to contain [A1'] an epoxy resin satisfying an inequality: n ≥ 2 among the component [A1]:

[Chem. 2]

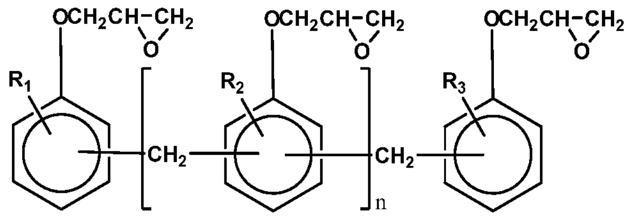

...(1)

In the general formula (I), $R_1$, $R_2$ and $R_3$ each independently represent a hydrogen atom or a methyl group. n represents an integer of 1 or more. The upper limit of n is preferably 15, and more preferably 12. When n is adjusted within the above range, since the viscosity of the epoxy resin composition does not excessively increase and the impregnating property to the reinforcing fiber is excellent, it is possible to obtain a fiber-reinforced composite material with less internal defects such as voids.

When containing the component [A1], since the elastic modulus of the cured resin increases and the heat resistance is also improved, it is possible to obtain a fiber-reinforced composite material having excellent mechanical property of material and heat resistance.

It is required to contain the component [A1] in an amount of 50 to 100 parts by mass in 100 parts by mass of the entire epoxy resin contained in the epoxy resin composition. The lower limit is preferably 60 parts by mass or more, and the upper limit is preferably 90 parts by mass or less. When the component [A1] is contained within the above range, the cured resin causes little coloration, and the balance between the elastic modulus and the heat resistance becomes satisfactory.

It is also required to contain the component [A1'] among the component [A1] in an amount of 50 to 80 parts by mass in 100 parts by mass of the entire epoxy resin contained in the epoxy resin composition. When the component [A1'] is contained within the above range, the heat resistance of the cured product scarcely deteriorates even when curing is performed in a state where moisture is mixed therein, it is possible to obtain a molded article having excellent heat resistance.

Examples of the component [A1] include a phenol novolac type epoxy resin and a cresol novolac type epoxy resin.

Examples of commercially available products of the phenol novolac type epoxy resin include "jER (registered trademark)" 152 and 154 (these products are manufactured by Mitsubishi Chemical Corporation), EPPN-201 (manufactured by Nippon Kayaku Co., Ltd.), "EPICRON (registered trademark)" N-740, N-770 and N-775 (these products are manufactured by DIC Corporation), "DEN (registered trademark)" 431, 438 and 439 (these products are manufactured by Olin Corporation), and the like.

Examples of commercially available products of the cresol novolac type epoxy resin include "EPICRON (registered trademark)" N-660, N-665, N-670, N-673, N-680, N-690 and N-695 (these products are manufactured by DIC Corporation), EOCN-102S, EOCN-103S and EOCN-104S (these products are manufactured by Nippon Kayaku Co., Ltd.), and the like.

From the viewpoint of the balance between the heat resistance and the coloration of the cured epoxy resin, the entire epoxy resin of the epoxy resin composition is required to have an average epoxy equivalent of 165 to 265 g/eq. The lower limit of the average epoxy equivalent is preferably 180 g/eq or more, and the upper limit is preferably 250 g/eq or less. If the average epoxy equivalent of the entire epoxy resin is less than 165 g/eq, since the heat resistance of the cured resin deteriorates and drastic coloration occurs, the appearance of the resulting fiber-reinforced composite material deteriorates. If the average epoxy equivalent of the entire epoxy resin is more than 265 g/eq, although the cured resin causes little

coloration, the heat resistance of the cured resin deteriorates.

The average epoxy equivalent of the entire epoxy resin of the epoxy resin composition is calculated by the following method.

(Method for Calculating Average Epoxy Equivalent of Entire Epoxy Resin in Epoxy Resin Composition)

The average epoxy equivalent (g/eq) of the entire epoxy resin in the epoxy resin composition can be calculated by the following numerical formula (I), where n types of epoxy resins are used in combination as the component [A], the total parts by mass of the entire epoxy resin is G, the epoxy equivalent of an epoxy resin y is Ey (g/eq), and the content is Wy parts by mass (here, y = 1, 2, 3, ⋯, n).
[Math. 1]

$$\text{Average epoxy equivalent (g/eq) of entire epoxy resin of epoxy resin composition}$$

$$= \frac{G}{\left\{\left(\frac{W_1}{E_1}\right)+\left(\frac{W_2}{E_2}\right)\cdots+\left(\frac{W_y}{E_y}\right)\cdots+\left(\frac{W_n}{E_n}\right)\right\}} \qquad \ldots(\mathrm{I})$$

<Component [B]>

The component [B] in the present invention is a curing agent and contains [B1] an aromatic urea. In the present invention, the curing agent [B] is preferably a self-polymerization type hardener which works as a curing agent proceeding self-polymerization of [A] an epoxy resin, and particularly preferably [B1] an aromatic urea. By using the curing agent [B] containing the aromatic urea [B1], it is possible to obtain a cured epoxy resin which causes little coloration and has satisfactory balance with the heat resistance, compared with other self-polymerization type hardeners.

In the present invention, from the viewpoint of the balance between the heat resistance and the coloration of the cured epoxy resin, there is a preferable range in the content of the aromatic urea [B1]. The amount of the aromatic urea [B1] blended is preferably within a range of 2.5 to 7.5 parts by mass based on 100 parts by mass of the entire epoxy resin contained in the epoxy resin composition. The lower limit of the content is preferably 3 parts by mass or more, and the upper limit is preferably 7 parts by mass or less. If the content of the aromatic urea [B1] is less than 2.5 parts by mass, the heat resistance of the cured resin deteriorates. If the content exceeds 7.5 parts by mass, since drastic coloration of the cured resin occurs, the appearance of the resulting fiber-reinforced composite material deteriorates.

Examples of the aromatic urea [B1] include 3-(3,4-dichlorophenyl)-1,1-dimethylurea, 3-(4-chlorophenyl)-1,1-dimethylurea, phenyldimethylurea, 4,4-methylenebis(diphenyldimethylurea), toluenebisdimethylurea and the like. It is possible to use, as commercially available products of the aromatic urea, DCMU99 (manufactured by Hodogaya Chemical Co., Ltd.), "Omicure (registered trademark)" 24, "Omicure (registered trademark)" 52, "Omicure (registered trademark)" 94 (these products are manufactured by PTI Japan Limited) and the like.

The aromatic urea [B1] is preferably a compound having two dimethylureide groups in one molecule of the aromatic urea, and more preferably a compound represented by the following general formula (II).

[Chem. 3]

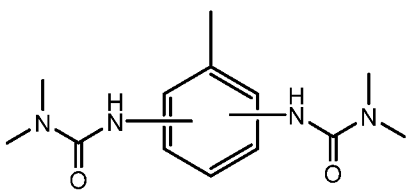

...(II)

By using the compound represented by the general formula (II), deterioration of the heat resistance tends to be suppressed when curing is performed in a state where moisture is mixed therein, so that a fiber-reinforced composite material having satisfactory appearance and high heat resistance is easily obtained.

When [B2] dicyandiamide is contained as the curing agent [B], white spots may be generated on the surface of the molded article, leading to deterioration of the appearance. Therefore, in the prepreg of the present invention, the content of dicyandiamide [B2] is required to be 0.5 part by mass or less, more preferably 0.2 part by mass or less, based on 100 parts by mass of the entire epoxy resin, and most preferably, dicyandiamide [B2] is not contained.

From the viewpoint of the heat resistance as determined when curing is performed in a state where moisture is

mixed therein, a small amount of dicyandiamide is preferably blended. Dicyandiamide is a compound having high polarity and extremely high water absorbency. When dicyandiamide reacts with an epoxy resin, hydroxyl groups having high polarity are generated. Therefore, in the case of containing dicyandiamide in the resin composition, the heat resistance of the cured product may drastically deteriorate when curing is performed in a state where moisture is mixed therein.

In the prepreg of the present invention, as long as the effects of the present invention are not impaired, curing agents other than the aromatic urea [B1] and dicyandiamide [B2] may be blended. However, since many of compounds to be used as the curing agent of the epoxy resin commonly have high polarity and high water absorbency, it is preferable to substantially contain only the aromatic urea [B1] as the curing agent [B], from the viewpoint of the heat resistance as determined when curing is performed in a state where moisture is mixed therein. "Substantially" as used herein means excluding compounds contained unintentionally, such as impurities produced inevitably during production of the curing agent, and means that it is only the aromatic urea [B1] which is blended intentionally as the curing agent in the epoxy resin composition. Specifically, the case where the aromatic urea [B1] accounts for 95% by mass or more of the curing agent [B] is defined as substantially containing only the aromatic urea [B1].

<Water Absorption Coefficient of Epoxy Resin Composition>

The epoxy resin composition used in the prepreg of the present invention is characterized in that moisture generated in the curing process is not easily mixed. First, a factor that influences the water absorption coefficient of the epoxy resin composition will be described.

From the viewpoint of the affinity between the epoxy resin composition and moisture, when the component to be used in the epoxy resin composition has high polarity, the water absorption coefficient tends to increase. It is also required to consider functional groups produced by a reaction between epoxy groups and the curing agent, and functional groups generated by hydrolysis of epoxy groups themselves. When a compound having primary or secondary amino groups is used as the curing agent, since hydroxyl groups are generated by a reaction with epoxy groups, the resin composition tends to easily absorb water in accordance with the progress of a curing reaction. When a curing agent having high basicity is used, since the curing agent accelerates hydrolysis of epoxy groups and hydroxyl groups generated by hydrolysis have high polarity, the epoxy resin composition tends to easily absorb water.

It is also required to consider the liquidity of the epoxy resin composition. As the liquidity of the epoxy resin composition increases, interdiffusion tends to occur when the epoxy resin composition is in contact with moisture, and moisture tends to be mixed in the epoxy resin composition. The epoxy resin composition to be used in the present invention contains an aromatic urea as the curing agent. The aromatic urea often has a reaction starting temperature of around 85°C. Before starting the curing reaction, the liquidity increases with a rise in temperature. Therefore, within a temperature range of lower than 85°C, as the temperature rises, moisture is easily mixed in the resin composition. Meanwhile, within a temperature range of higher than 85°C, the liquidity decreases with the progress of the curing reaction, the epoxy resin composition does not easily absorb water, and thus the water absorption coefficient tends to be saturated.

As mentioned above, water absorption behavior of the epoxy resin in the curing process is remarkably complicated. We have conducted investigations about these factors, as a result, found out the fact that, when an aromatic urea is used as the curing agent, the water absorption coefficient as determined when stored in an atmosphere at 85°C and 95%RH for 2 hours is preferably decreased so as to suppress deterioration of the heat resistance as determined when curing is performed in a state where moisture is mixed therein, and thus completed the present invention.

It is required for the epoxy resin composition used in the present invention to exhibit a water absorption coefficient of 3.0% by mass or less, preferably 2.5% by mass or less, and more preferably 2.0% by mass or less, based on 100% by mass of the epoxy resin composition, when the epoxy resin composition is stored in an atmosphere at 85°C and 95%RH for 2 hours. If the water absorption coefficient is more than 3.0% by mass, when the epoxy resin composition is stored in an atmosphere at 85°C and 95%RH for 2 hours, the heat resistance of the cured resin deteriorates when curing is performed in a state where moisture is mixed therein. It is possible to suppress the water absorption coefficient of the epoxy resin composition by increasing the amount of [A1'] blended among the epoxy resin [A]. It is also possible to suppress the water absorption coefficient by decreasing the amount of dicyandiamide [B2] blended in the curing agent [B].

The water absorption coefficient as determined when an epoxy resin composition is stored in an atmosphere at 85°C and 95%RH for 2 hours is determined in the following manner: 5 g of an epoxy resin composition is charged in a container with a circular bottom surface having a diameter of 4 cm and the container is stored in a thermo-hygrostat chamber maintained in an environment at a temperature of 85°C and 95%RH for 2 hours, and then the water absorption coefficient is calculated from a change in mass of the epoxy resin composition before and after storage by the following numerical formula (II).

[Math. 2]

$$\text{Water absorption coefficient (\% by mass)} = [(\text{mass of epoxy resin composition after storage} - \text{mass of epoxy resin composition before storage})/(\text{mass of epoxy resin composition before storage})] \times 100 \quad \text{(II)}$$

<Method for Preparing Epoxy Resin Composition>

For the preparation of the epoxy resin composition of the present invention, for example, a machine such as a kneader, a planetary mixer, a triple roll mil, and a twin screw extruder may be used for kneading, or kneading may be performed by hand using a beaker and a spatula as long as uniform kneading is possible. Examples of preferable preparation method include the following methods. Namely, a component [A] is charged in a container and the temperature is raised to any temperature of 130°C to 180°C while stirring, thus uniformly dissolving an epoxy resin. Then, the temperature is preferably lowered to the temperature of 100°C or lower, more preferably 80°C or lower, and still more preferably 60°C or lower, while stirring, and a component [B] is charged, followed by kneading. At this time, in order to uniformly mix the component [B], it is more preferable to fabricate a curing agent masterbatch in which portion of the component [A] is mixed in advance with the component [B].

<Prepreg>

Next, a prepreg will be described. For obtaining the fiber-reinforced composite material, prepregs are preferably formed of the epoxy resin composition and the reinforcing fibers in advance since it becomes easy to store and the handling property is excellent. The prepreg can be obtained by impregnating the reinforcing fibers with the epoxy resin composition. Examples of the impregnation method include a hot melt method (a dry method).

The hot melt method is a method in which the reinforcing fibers are directly impregnated with the epoxy resin composition of which viscosity is decreased by heating. Specifically, a film in which a release paper is coated with the epoxy resin composition is fabricated in advance. Subsequently, the film is stacked on one side or both sides of a sheet formed by arranging the reinforcing fibers or woven reinforcing fibers (a cloth), and heat and pressure are applied, thereby impregnating the reinforcing fibers with the resin.

There is no particular limitation on the form of the reinforcing fiber to be used for the prepreg, and a woven fabric is preferable since the resulting molded article has beautiful intersections of fibers and high design properties. When dicyandiamide is used as the curing agent, white spots are often generated in the vicinity of intersections of fibers in the case of molding a prepreg using a woven fabric. When the woven fabric is used as the reinforcing fiber of the prepreg, the effects of the present invention are especially largely exerted.

The reinforcing fibers used in the present invention are not particularly limited, and glass fibers, carbon fibers, aramid fibers, boron fibers, alumina fibers, silicon carbide fibers and the like are used. Two or more types of fibers may be used in combination. Of these fibers, the carbon fibers are preferably used from the viewpoint of obtaining the fiber-reinforced material having light weight and high stiffness and obtaining the molded article in which the fibers have black gloss and high design properties.

White spots generated on the surface of the molded article, which are the problem in the present invention, are considered to be generated by filtering out dicyandiamide with fibers in the case of impregnating with the epoxy resin composition, or by causing segregation of dicyandiamide in the vicinity of the fibers due to the flow of the resin during molding. When dicyandiamide is used as the curing agent, since white spots are easily generated in the fibers having a small single fiber diameter, the effects of the present invention are largely exerted in case where the reinforcing fibers to be used in the fiber-reinforced composite material have a small single fiber diameter. From this viewpoint, the single fiber diameter of the reinforcing fiber is preferably 3 to 20 μm, and still more preferably 3 to 10 μm. By adjusting the single fiber diameter within the above range, the effects of the present invention are largely exerted.

A mass ratio of the epoxy resin composition to the reinforcing fibers in the prepreg is preferably within a range of 10:90 to 70:30, more preferably 20:80 to 60:40, and still more preferably 30:70 to 50:50. By adjusting the mass ratio of the epoxy resin composition to the reinforcing fibers within the above range, it becomes easy to obtain a prepreg having high impregnating property, thus obtaining a fiber-reinforced composite material with less internal defects such as voids.

<Method for Molding Prepreg>

It is possible to appropriately use, as a prepreg lamination method, a press forming method, an autoclave molding method, a bagging molding method, a wrapping tape method, an internal pressure molding method and the like. Of these methods, the effects of the present invention are especially largely exerted in the autoclave molding method and the bagging molding method in which a mold containing moisture and a subsidiary material are sometimes used.

<Fiber-Reinforced Composite Material>

By curing the prepreg of the present invention, it is possible to obtain a fiber-reinforced composite material which achieves both excellent heat resistance and low color and has excellent appearance.

The heat resistance of the fiber-reinforced composite material can be evaluated by measuring Tg of a cured

epoxy resin obtained by curing the epoxy resin composition contained in the prepreg. High Tg of the cured epoxy resin indicates that the resulting fiber-reinforced composite material has high heat resistance. Specifically, Tg is preferably 115°C or higher, more preferably 120°C or higher, and still more preferably 125°C or higher.

The low color of the fiber-reinforced composite material can be evaluated by measuring a yellowness index of a cured epoxy resin obtained by curing the epoxy resin composition contained in the prepreg. Low yellowness index of the cured epoxy resin indicates that the resulting fiber-reinforced composite material is excellent in low color. Specifically, the yellowness index is preferably 90 or less, more preferably 80 or less, and still more preferably 70 or less.

The fiber-reinforced composite material of the present invention is preferably used in sports applications, general industrial applications and aerospace applications. More specifically, in sports applications, the fiber-reinforced composite material is preferably used for golf shafts, fishing rods, tennis and badminton rackets, hockey sticks and ski poles. In general industrial applications, the fiber-reinforced composite material is preferably used for structural materials and interior materials for mobile bodies such as motor vehicles, motorcycles, bicycles, ships and railway vehicles; drive shafts, leaf springs, windmill blades, pressure vessels, flywheels, paper making rollers, roofing materials, cables and repair reinforcing materials.

## EXAMPLES

Hereinafter, the present invention will be described more specifically with reference to Examples, but the present invention is not limited to the description of these Examples.

The measurement of various physical properties was performed in an environment at a temperature of 23°C and a relative humidity of 50% unless otherwise stated.

The materials used to prepare the respective epoxy resin compositions are as follows.

<Materials used>

Component [A]: Epoxy resin

[A1] Epoxy resin containing an epoxy resin represented by the general formula (I)

"jER (registered trademark)" 154 (phenol novolac type epoxy resin, epoxy equivalent: 178, compound of the general formula (I) in which $R_1$, $R_2$ and $R_3$ each represent hydrogen, content of an epoxy resin of the general formula (I) in which n = 0: 17% by mass, content of an epoxy resin of the general formula (I) in which n = 1: 15% by mass, content of an epoxy resin of the general formula (I) in which n ≥ 2: 68% by mass (i.e., content of [A1] is 83% by mass, content of [A1'] is 68% by mass), manufactured by Mitsubishi Chemical Corporation) "EPICLON (registered trademark)"N-770 (phenol novolac type epoxy resin, epoxy equivalent: 188, compound of the general formula (I) in which $R_1$, $R_2$ and $R_3$ each represent hydrogen, content of an epoxy resin of the general formula (I) in which n = 0: 9% by mass, content of an epoxy resin of the general formula (I) in which n = 1: 7% by mass, content of an epoxy resin of the general formula (I) in which n ≥ 2: 84% by mass (i.e., content of [A1] is 91% by mass, content of [A1'] is 84% by mass), manufactured by Mitsubishi Chemical Corporation)

Other Epoxy Resins

"jER (registered trademark)" 828 (bisphenol A type epoxy resin, epoxy equivalent: 189, manufactured by Mitsubishi Chemical Corporation)

"Epotohto (registered trademark)" YDF-2001 (bisphenol F type epoxy resin, epoxy equivalent: 475, manufactured by Tohto Kasei Co., Ltd.)

"jER (registered trademark)" 1007 (bisphenol A type epoxy resin, epoxy equivalent: 1,975, manufactured by Mitsubishi Chemical Corporation)

"DER (registered trademark)" 858 (epoxy resin epoxy resin having an oxazolidone ring, epoxy equivalent: 400, manufactured by Olin Corporation)

"TEPIC (registered trademark)"-S (epoxy equivalent: 100, manufactured by Nissan Chemical Corporation)

Component [B]: Curing agent

[B1] Aromatic urea

DCMU99 (3-(3,4-dichlorophenyl)-1,1-dimethylurea, manufactured by Hodogaya Chemical Co., Ltd.)
"Omicure (registered trademark)" 24 (4,4'-methylenebis(phenyldimethylurea, compound represented by the general formula (II), manufactured by PTI Japan Limited)

[B2] Dicyandiamide

"jER Cure (registered trademark)" DICY7 (dicyandiamide, manufactured by Mitsubishi Chemical Corporation)

Other curing agents

"CUREDUCT (registered trademark)" P-0505 (imidazole adduct, manufactured by SHIKOKU CHEMICALS CORPORATION)

<Method for Calculating Average Epoxy Equivalent of Entire Epoxy Resin of Epoxy Resin Composition>

The average epoxy equivalent (g/eq) of the entire epoxy resin in the epoxy resin composition can be calculated by the following numerical formula (I), where n types of epoxy resins are used in combination as the component [A], the total parts by mass of the entire epoxy resin is G, the epoxy equivalent of an epoxy resin y among the entire epoxy resin is Ey (g/eq), and the content is Wy parts by mass (here, y = 1, 2, 3, ···, n).
[Math. 3]

$$\text{Average epoxy equivalent (g/eq) of entire epoxy resin of epoxy resin composition}$$

$$= \frac{G}{\left\{\left(\frac{W_1}{E_1}\right)+\left(\frac{W_2}{E_2}\right)\cdots+\left(\frac{W_y}{E_y}\right)\cdots+\left(\frac{W_n}{E_n}\right)\right\}} \qquad \ldots(\mathrm{I})$$

<Method for Preparing Epoxy Resin Composition>

(1) Preparation of curing agent masterbatch

In a kneader, the epoxy resin [A] mentioned in Tables 1 and 2 was charged. After raising the temperature to 150°C while kneading, the epoxy resin was kept at the same temperature for 1 hour to obtain a transparent viscous solution. After lowering the temperature to 60°C while continuing to knead, the curing agent [B] mentioned in Tables 1 and 2 was charged, the mixture was kneaded at the same temperature for 30 minutes to obtain an epoxy resin composition. The compositions of the epoxy resin compositions of the respective Examples and Comparative Examples are shown in Tables 1 and 2.

<Method for Evaluating Water Absorption Coefficient of Epoxy Resin Composition>

The water absorption coefficient as determined when an epoxy resin composition is stored in an atmosphere at 85°C and 95%RH for 2 hours was evaluated in the following manner. In a container with a circular bottom surface having a diameter of 4 cm, 5 g of an epoxy resin composition prepared in accordance with aforementioned <Method for Preparing Epoxy Resin Composition> was charged and the container was stored in a thermo-hygrostat chamber maintained in an environment at a temperature of 85°C and 95%RH for 2 hours, and then the mass of the epoxy resin composition after storage was measured and the water absorption coefficient was calculated by the following numerical formula (II). An average of values measured using three samples (n = 3) was regarded as the water absorption coefficient.
[Math. 4]

Water absorption coefficient (% by mass) = [(mass of epoxy resin composition after storage - mass of epoxy resin composition before storage)/(mass of epoxy resin composition before storage)] × 100 (II)

<Method for Fabricating Cured Epoxy Resin>

The epoxy resin composition prepared in accordance with aforementioned <Method for Preparing Epoxy Resin Composition> was defoamed in a vacuum and cured at a temperature of 130°C for 90 minutes in a mold having a 2 mm thick spacer of "Teflon (registered trademark)" set to produce a product having a thickness of 2 mm, thus obtaining a plate-shaped cured epoxy resin having a thickness of 2 mm.

<Method for Fabricating Woven Fabric Carbon Fiber Composite Material (hereinafter referred to as woven fabric CFRP)>

The epoxy resin composition prepared in accordance with aforementioned <Method for Preparing Epoxy Resin Composition> was applied on a release paper using a film coater to fabricate a resin film having an areal weight of 66 g/$m^2$. After preparing two-way cloth (2/2 twill weave, areal weight: 198 g/$m^2$) using carbon fibers "TORAYCA (registered trademark)" T300 (manufactured by Toray Industries, Inc.), two resin films were stacked on both sides of the cloth, and then heat and pressure were applied from both sides using a prepregging equipment, thereby impregnating the carbon fiber cloth with the epoxy resin composition to obtain a woven fabric prepreg. The content of the resin of the prepreg was 40% by mass.

After adjusting the fiber direction of this woven fabric prepreg in one direction, the woven fabric prepreg was overlaid 10 plies and the resulting article was covered with a nylon film without making a gap, and then cured by applying heat and pressure in an autoclave at 130°C under an internal pressure of 0.3 MPa over 2 hours to fabricate a woven fabric CFRP.

<Method for Evaluating Physical Properties>

(1) Tg of cured epoxy resin

The cured epoxy resin fabricated in accordance with aforementioned <Method for Fabricating Cured Epoxy Resin> was finely ground. After weighing 3 mg of the ground cured epoxy resin in a sample pan, the measurement was performed from 30°C to 230° under constant temperature rise condition of 10°C/minute using a differential scanning calorimeter (Q-2000: manufactured by TA Instruments). The midpoint of the inflection point of the obtained caloric-temperature curve was regarded as a glass transition temperature (hereinafter referred to as Tg).

(2) Tg of cured epoxy resin cured by blending water

In the same manner as in aforementioned <Method for Fabricating Cured Epoxy Resin>, except that those obtained by adding 5% by mass of water to the epoxy resin composition prepared in accordance with aforementioned <Method for Preparing Epoxy Resin Composition> and kneading using a planetary mixer were used as they are without defoaming, curing was performed at a temperature of 130°C for 90 minutes in a mold set to produce a product having a thickness of 2 mm, thus obtaining a plate-shaped cured epoxy resin having a thickness of 2 mm. The obtained cured epoxy resin contained voids. The cured epoxy resin was finely ground. After weighing 3 mg of the ground cured epoxy resin in a sample pan, the measurement was performed from 30°C to 230° under constant temperature rise condition of 10°C/minute using a differential scanning calorimeter (Q-2000: manufactured by TA Instruments). The midpoint of the inflection point of the obtained caloric-temperature curve was regarded as Tg.

(3) Elastic modulus of cured epoxy resin

A test piece with dimensions of a width of 10 mm and a length of 60 mm was cut out of the cured epoxy resin prepared in accordance with aforementioned <Method for Fabricating Cured Epoxy Resin>. Using an Instron universal tester (manufactured by INSTRON, Ltd.), with a span length of 32 mm and a crosshead speed of 100 mm/minute, three-point bending was performed in accordance with JIS K7171 (1994) and a bending elastic modulus was measured. An average of values measured using six test pieces (n = 6) was regarded as the elastic modulus.

(4) Yellowness index of cured epoxy resin

A test piece with dimensions of 3 cm square and a thickness of 2 mm was cut out of the cured epoxy resin prepared in accordance with aforementioned <Method for Fabricating Cured Epoxy Resin>. With respect to this test piece, using a spectrophotometer MSC-P (manufactured by Suga Test Instruments Co., Ltd.), color of transmitting objects was measured in accordance with JIS Z8722 (2009) and Tristimulus values was determined. Illuminant was D65, the

geometrical condition was e, the measurement method was spectrophotometric colorimetry, the effective wavelength width was 5 nm, the wavelength interval was 5 nm, and the color system was XYZ color system. Based on the obtained Tristimulus values, the yellowness index was calculated in accordance with JIS K7373 (2006).

(5) Appearance of woven fabric CFRP

The woven fabric CFRP fabricated in accordance with aforementioned <Method for Fabricating Woven Fabric CFRP> was immersed in water at 40°C for 7 days. With respect to the woven fabric CFRP after immersion, the appearance of intersections of fibers was visually observed. As a result, the case where white spots are not observed was rated "good", whereas, the case where white spots are observed was rated "poor".

(Example 1)

Using 80 parts by mass of "jER (registered trademark)" 154 and 20 parts by mass of "Epotohto (registered trademark)" YDF2001 as the epoxy resin of the component [A], and using 4 parts by mass of "Omicure (registered trademark)" 24 as the aromatic urea [B1], an epoxy resin composition was prepared in accordance with aforementioned <Method for Preparing Epoxy Resin Composition>.

In 100 parts by mass of the entire epoxy of this epoxy resin composition, the content of the component [A1] was 66 parts by mass and the content of the component [A1'] was 54 parts by mass. The water absorption coefficient as determined when the epoxy resin composition was stored in an atmosphere at 85°C and 95%RH for 2 hours was 1.7% by mass.

A cured epoxy resin was fabricated from the obtained epoxy resin composition in accordance with aforementioned <Method for Fabricating Cured Epoxy Resin>. With respect to this cured epoxy resin, Tg, Tg as determined when cured by blending 5% by mass of water, the bending elastic modulus and the yellowness index were measured. Tg was 129°C, Tg as determined when cured by blending water was 126°C, the bending elastic modulus was 3.5 GPa, the yellowness index was 64, and the cured resin exhibited satisfactory physical properties. A woven fabric CFRP was fabricated from the obtained epoxy resin composition and then the appearance was evaluated. As a result, white spots were not observed.

(Examples 2 to 10)

In the same manner as in Example 1, except that the resin composition was changed as shown in Table 1, epoxy resin compositions, cured epoxy resins and woven fabric CFRP were fabricated. Parts by mass of the component [A1] and parts by mass of the component [A1'] in 100 parts by mass of the entire epoxy of the Examples, and the water absorption coefficient as determined when stored at 85°C and 95%RH for 2 hours are shown in Table 1.

With respect to the Examples, all of Tg of the cured epoxy resin, Tg as determined when cured by blending water, the elastic modulus, the yellowness index, and the appearance of the woven fabric CFRP were satisfactory as shown in Table 1.

(Comparative Example 1)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin, the elastic modulus and the appearance of the woven fabric CFRP were satisfactory. However, the water absorption coefficient as determined when stored at 85°C and 95%RH for 2 hours was 3.1% by mass, thus failing to satisfy the condition (c) in the present invention, leading to low Tg as determined when cured by blending water.

(Comparative Example 2)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin, the elastic modulus and the appearance of the woven fabric CFRP were satisfactory. However, the water absorption coefficient as determined when stored at 85°C and 95%RH for 2 hours was 3.7% by mass, thus failing to satisfy the condition (c) in the present invention, leading to low Tg as determined when cured by blending water.

(Comparative Example 3)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin and the elastic modulus were satisfactory, but 6 parts by mass of dicyandiamide is contained, thus failing to satisfy the condition (e) in the present invention, so that white spots were observed in the woven fabric CFRP. The water absorption coefficient as determined when stored at 85°C and 95%RH for 2 hours was 3.8% by mass, thus failing to satisfy the condition (c) in the present invention, leading to low Tg as determined when cured by blending water.

(Comparative Example 4)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin and the elastic modulus were satisfactory, 0.6 part by mass of dicyandiamide is contained, thus failing to satisfy the condition (e) in the present invention, so that white spots were observed in the woven fabric CFRP.

(Comparative Example 5)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin and the elastic modulus were satisfactory, but the content of [A1'] in 100 parts by mass of the entire epoxy resin is less than 50 parts by mass, thus failing to satisfy the condition (a) in the present invention, leading to low Tg as determined when cured by blending water.

(Comparative Example 6)

With respect to the resin composition shown in Table 2, an epoxy resin composition, a cured epoxy resin and a woven fabric CFRP were fabricated in the same manner as in Example 1. The evaluation results of physical properties are shown in Table 2. The elastic modulus of the cured epoxy resin, the yellowness index and the appearance of the woven fabric CFRP were satisfactory. However, the average epoxy equivalent of the entire epoxy resin exceeds 265 g/eq, thus failing to satisfy the condition (b) in the present invention, leading to low Tg of the cured epoxy resin.

(Comparative Example 7)

With respect to the resin composition shown in Table 2, an epoxy resin composition, a cured epoxy resin and a woven fabric CFRP were fabricated in the same manner as in Example 1. The evaluation results of physical properties are shown in Table 2. Tg of the cured epoxy resin, the elastic modulus and the appearance of the woven fabric CFRP were satisfactory. However, the water absorption coefficient as determined when stored at 85°C and 95%RH for 2 hours was 4.1% by mass, thus failing to satisfy the condition (c) in the present invention, leading to low Tg as determined when cured by blending water.

(Comparative Example 8)

With respect to the resin composition shown in Table 2, an epoxy resin composition, a cured epoxy resin and a woven fabric CFRP were fabricated in the same manner as in Example 1. The evaluation results of physical properties are shown in Table 2. The average epoxy equivalent of the entire epoxy resin exceeds 265 g/eq, thus failing to satisfy the condition (b), leading to low Tg of the cured epoxy resin. The content of [A1'] in 100 parts by mass of the entire epoxy resin is less than 50 parts by mass, thus failing to satisfy the condition (a) in the present invention, leading to low Tg as determined when cured by blending water.

(Comparative Example 9)

With respect to the resin composition shown in Table 2, an epoxy resin composition, a cured epoxy resin and a woven fabric CFRP were fabricated in the same manner as in Example 1. The evaluation results of physical properties are shown in Table 2. The content of [A1'] in 100 parts by mass of the entire epoxy resin is less than 50 parts by mass, thus failing to satisfy the condition (a) in the present invention, leading to low Tg as determined when cured by blending water.

(Comparative Example 10)

With respect to the resin composition shown in Table 2, an epoxy resin composition, a cured epoxy resin and a woven fabric CFRP were fabricated in the same manner as in Example 1. The evaluation results of physical properties are collectively shown in Table 2. The content of [A1'] in 100 parts by mass of the entire epoxy resin is less than 50 parts by mass, thus failing to satisfy the condition (a) in the present invention, leading to low Tg as determined when cured by blending water.

[Table 1]

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Epoxy resin composition (parts by mass) | Component | | | | | | | | | | | | |
| | [A] Epoxy resin | [A1] Epoxy resin containing epoxy resin represented by the general formula (I) | "jER®" 154 | 80 | 70 | 50 | 50 | 50 | 90 | 90 | 90 | 50 | |
| | | | "EPICLON®" N-770 | | 20 | 35 | 35 | 35 | | | | 30 | 61 |
| | | Other epoxy resins | "jER®" 828 | | | 15 | 15 | 15 | | | | | 20 |
| | | | "Epotohto®" YDF2001 | 20 | 10 | | | | 10 | 10 | 10 | | |
| | | | "jER®" 1007 | | | | | | | | | | |
| | | | "DER®" 858 | | | | | | | | | 20 | 19 |
| | | | "TEPIC®"-S | | | | | | | | | | |
| | [B] Curing agent | [B1] Aromatic urea | DCMU99 | | | | | | | 3 | 3 | | |
| | | | Omicure® 24 | 4 | 4 | 2 | 4 | 8 | 4 | | | 4 | 4 |
| | | [B2] Dicyandiamide | "jER Cure®" DICY7 | | | | | | | | | | |
| | | Other curing agents | "CUREDUCT®" P-0505 | | | | | | | 1 | 2 | | |
| Resin composition parameter | Parts by mass of [A1] in 100 parts by mass of entire epoxy resin | | | 66 | 76 | 73 | 73 | 73 | 75 | 75 | 75 | 69 | 56 |
| | Parts by mass of [A1'] in 100 parts by mass of entire epoxy resin | | | 54 | 64 | 63 | 63 | 63 | 61 | 61 | 61 | 59 | 51 |
| | Average epoxy equivalent/$g \cdot eq^{-1}$ of entire epoxy resin | | | 203 | 192 | 183 | 183 | 183 | 190 | 190 | 190 | 204 | 209 |
| | Water absorption coefficient/% as determined when epoxy resin composition is stored in atmosphere at 85°C and 95%RH for 2 hours | | | 1.7 | 1.4 | 1.4 | 1.7 | 1.8 | 1.9 | 2.3 | 2.7 | 1.4 | 1.5 |

(continued)

| Component | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Cured epoxy resin | Tg/°C | 129 | 138 | 130 | 135 | 143 | 133 | 127 | 133 | 138 | 131 |
| | Tg/°C as determined when curing is performed by blending 5% by mass of water | 123 | 137 | 123 | 135 | 140 | 130 | 121 | 117 | 138 | 117 |
| | Elastic modulus/GPa | 3.5 | 3.6 | 3.7 | 3.7 | 3.7 | 3.5 | 3.5 | 3.6 | 3.6 | 3.5 |
| | Yellowness index | 64 | 59 | 37 | 56 | 85 | 60 | 62 | 67 | 66 | 75 |
| Woven fabric CFRP | Appearance (white spots are not generated: good, white spots are generated: poor) | good | good | good | good | good | good | good | good | good | good |

[Table 2]

| | Component | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|
| Epoxy resin composition (parts by mass) | [A] Epoxy resin | [A1] Epoxy resin containing epoxy resin represented by the general formula (I) | "jER®" 154 | 90 | 90 | 90 | 90 | 70 | 50 | | | | |
| | | | "EPICLON®" N-770 | | | | | | | | 35 | 35 | |
| | | Other epoxy resins | "jER®" 828 | | | | | | | 25 | 15 | 15 | 30 |
| | | | "Epotohto®" YDF2001 | 10 | 10 | 10 | 10 | 30 | | 55 | 50 | | 70 |
| | | | "jER®" 1007 | | | | | | 50 | | | | |
| | | | "DER®" 858 | | | | | | | | | 50 | |
| | | | "TEPIC®"-S | | | | | | | 20 | | | |
| | [B] Curing agent | [B1] Aromatic urea | DCMU99 | 3 | | 3 | | | | | | | |
| | | | Omicure® 24 | | | | 4 | 4 | 4 | 4 | 4 | 4 | 4 |
| | | [B2] Dicyandiamide | "jER Cure®" DICY7 | | | 6 | 0.6 | | | | | | |
| | | Other curing agents | "CUREDUCT®" P-0505 | 3 | 6 | | | | | | | | |

(continued)

| | Component | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Resin composition parameter | Parts by mass of [A1] in 100 parts by mass of entire epoxy resin | | 75 | 75 | 75 | 75 | 58 | 42 | 0 | 32 | 32 | 0 |
| | Parts by mass of [A1'] in 100 parts by mass of entire epoxy resin | | 61 | 61 | 61 | 61 | 48 | 34 | 0 | 29 | 29 | 0 |
| | Average epoxy equivalent/$g \cdot eq^{-1}$ of entire epoxy resin | | 190 | 190 | 190 | 190 | 219 | 327 | 223 | 270 | 256 | 327 |
| | Water absorption coefficient/% as determined when epoxy resin composition is stored in atmosphere at 85°C and 95%RH for 2 hours | | 3.1 | 3.7 | 3.8 | 2.3 | 1.6 | 1.6 | 4.1 | 1.8 | 1.6 | 1.8 |
| | Cured epoxy resin | Tg/°C | 141 | 152 | 129 | 135 | 125 | 107 | 131 | 123 | 130 | 114 |
| | | Tg/°C as determined when curing is performed by blending 5% by mass of water | 110 | 108 | 107 | 128 | 113 | 92 | 80 | 102 | 108 | 90 |
| | | Elastic modulus/GPa | 3.6 | 3.6 | 3.6 | 3.5 | 3.6 | 3.4 | 3.5 | 3.6 | 3.4 | 3.0 |
| | | Yellowness index | 78 | 92 | 53 | 59 | 68 | 49 | 49 | 69 | 72 | 30 |
| | Woven fabric CFRP | Appearance (white spots are not generated: good, white spots are generated: poor) | good | good | poor | poor | good | good | good | good | good | good |

INDUSTRIAL APPLICABILITY

The fiber-reinforced composite material using the prepreg of the present invention has excellent heat resistance and low color. Since white spots are not generated on the surface of a molded article of the fiber-reinforced composite material, the fiber-reinforced composite material has excellent design properties together with low color. Moreover, since the heat resistance scarcely deteriorates even when curing is performed in a state where moisture is mixed therein, the fiber-reinforced composite material can be used without worrying about an influence of mixing of moisture occurred when freezing and thawing of the prepreg are repeated, and mixing of moisture generated from a mold and a subsidiary material in the curing process. The prepreg and the fiber-reinforced composite material of the present invention are preferably used in sports applications and general industrial applications.

## Claims

1. A prepreg comprising an epoxy resin composition containing [A] an epoxy resin and [B] a curing agent, and a reinforcing fiber, wherein the epoxy resin composition satisfies the following conditions (a) to (e):

   (a) [A1] an epoxy resin represented by the general formula (I) is contained as the epoxy resin [A] in an amount of 50 to 100 parts by mass in 100 parts by mass of the entire epoxy resin, and [A1'] an epoxy resin satisfying an inequality: $n \geq 2$ among the component [A1] is contained in an amount of 50 to 80 parts by mass in 100 parts by mass of the entire epoxy resin;

   [Chem. 1]

   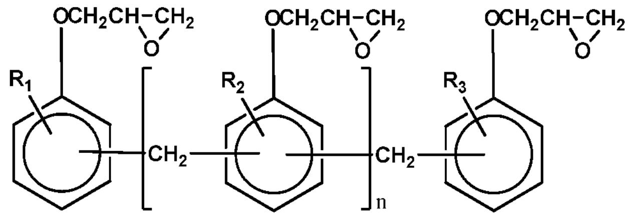

   ...(1)

   wherein, in the general formula (I), $R_1$, $R_2$ and $R_3$ each independently represent a hydrogen atom or a methyl group, and n represents an integer of 1 or more;
   (b) the entire epoxy resin has an average epoxy equivalent of 165 to 265 g/eq, wherein the average epoxy equivalent is measured as described in the description;
   (c) a water absorption coefficient as determined when the epoxy resin composition is stored in an atmosphere at 85°C and 95%RH for 2 hours is 3.0% by mass or less based on 100% by mass of the epoxy resin composition, wherein the water absorption coefficient is measured as described in the description;
   (d) [B1] an aromatic urea is contained as [B] a curing agent; and
   (e) the content of [B2] dicyandiamide of the curing agent [B] is 0.5 part by mass or less based on 100 parts by mass of the entire epoxy resin.

2. The prepreg according to claim 1, wherein the content of the dicyandiamide [B2] is 0.2 part by mass or less based on 100 parts by mass of the entire epoxy resin.

3. The prepreg according to claim 2, wherein the dicyandiamide [B2] is not contained in the epoxy resin composition.

4. The prepreg according to claim 3, wherein only [B1] an aromatic urea is substantially contained as the curing agent [B].

5. The prepreg according to any one of claims 1 to 4, wherein the aromatic urea [B1] contains a compound having two dimethylureide groups in one molecule of the aromatic urea.

6. The prepreg according to claim 5, wherein the aromatic urea [B1] contains a compound represented by the general formula (II).

[Chem. 2]

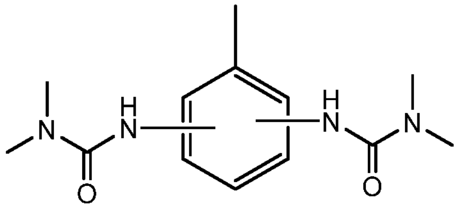

...(II)

7. The prepreg according to any one of claims 1 to 6, wherein the content of the aromatic urea [B1] is 2.5 to 7.5 parts by mass based on 100 parts by mass of the entire epoxy resin.

8. The prepreg according to any one of claims 1 to 7, wherein a reinforcing fiber is in the form of a woven fabric.

9. The prepreg according to any one of claims 1 to 8, wherein the reinforcing fiber is a carbon fiber.

10. A fiber-reinforced composite material comprising the prepreg according to any one of claim 1 to 9 being cured.

**Patentansprüche**

1. Prepreg, das eine Epoxidharz-Zusammensetzung, die [A] ein Epoxidharz und [B] ein Härtungsmittel enthält, und eine Verstärkungsfaser umfasst, wobei die Epoxidharz-Zusammensetzung die folgenden Bedingungen (a) bis (e) erfüllt.

(a) [A1] ein durch die allgemeine Formel (I) wiedergegebenes Epoxidharz ist als das Epoxidharz [A] mit einem Anteil von 50 bis 100 Massenteilen in 100 Massenteilen des gesamten Epoxidharzes enthalten, und [A1'] ein die Ungleichung $n \geq 2$ erfüllendes Epoxidharz in der Komponente [A1] ist mit einem Anteil von 50 bis 80 Massenteilen in 100 Massenteilen des gesamten Epoxidharzes enthalten,

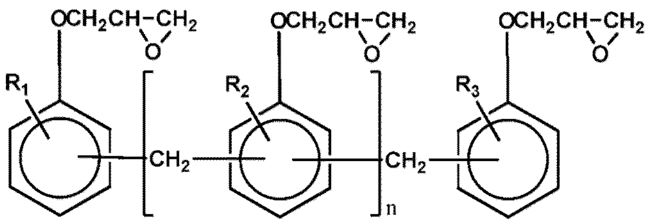

(I)

wobei in der allgemeinen Formel (I) $R_1$, $R_2$ und $R_3$ jeweils unabhängig ein Wasserstoffatom oder eine Methylgruppe wiedergeben und n eine Ganzzahl von 1 oder mehr wiedergibt,
(b) das gesamte Epoxidharz weist ein durchschnittliches Epoxidäquivalent von 165 bis 265 g/Äq auf, wobei das durchschnittliche Epoxidäquivalent wie in der Beschreibung beschrieben gemessen wird,
(c) der Wasserabsorptionskoeffizient, der bestimmt wird, wenn die Epoxidharz-Zusammensetzung in einer Atmosphäre bei 85°C und 95%RH für 2 Stunden gelagert wird, beträgt 3,0 Massenprozent oder weniger basierend auf 100 Massenprozent der Epoxidharz-Zusammensetzung, wobei der Wasserabsorptionskoeffizient wie in der Beschreibung beschrieben gemessen wird,
(d) [B1] ein aromatischer Harnstoff ist als [B] das Härtungsmittel enthalten, und
(e) der Anteil von [B2] Dicyandiamid des Härtungsmittels [B] beträgt 0,5 Massenteile oder weniger basierend auf 100 Massenteilen des gesamten Epoxidharzes.

2. Prepreg nach Anspruch 1, wobei der Anteil des Dicyanimids [B2] 0,2 Massenteile oder weniger basierend auf 100 Massenteilen des gesamten Epoxidharzes beträgt.

3. Prepreg nach Anspruch 2, wobei das Dicyanimid [B2] nicht in der Epoxidharz-Zusammensetzung enthalten ist.

4. Prepreg nach Anspruch 3, wobei im Wesentlichen nur [B1] ein aromatischer Harnstoff als das Härtungsmittel [B]

enthalten ist.

5. Prepreg nach einem der Ansprüche 1 bis 4, wobei der aromatische Harnstoff [B1] eine Verbindung mit zwei Dimethylureidgruppen in einem Molekül des aromatischen Harnstoffs enthält.

6. Prepreg nach Anspruch 5, wobei der aromatische Harnstoff [B1] eine durch die allgemeine Formel (II) wiedergegebene Verbindung enthält:

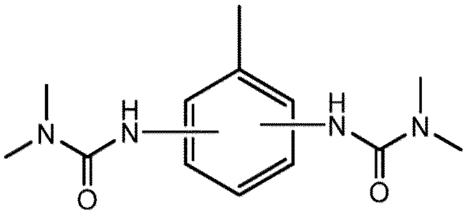

(II).

7. Prepreg nach einem der Ansprüche 1 bis 6, wobei der Anteil des aromatischen Harnstoffs [B1] 2,5 bis 7,5 Massenteile basierend auf 100 Massenteilen des gesamten Epoxidharzes beträgt.

8. Prepreg nach einem der Ansprüche 1 bis 7, wobei die Verstärkungsfaser die Form eines Gewebes aufweist.

9. Prepreg nach einem der Ansprüche 1 bis 8, wobei die Verstärkungsfaser eine Kohlefaser ist.

10. Faserverstärktes Verbundmaterial, das das ausgehärtete Prepreg gemäß einem der Ansprüche 1 bis 9 umfasst.

**Revendications**

1. Pré-imprégné comprenant une composition de résine époxy contenant [A] une résine époxy et [B] un agent de durcissement, et une fibre de renforcement, dans lequel la composition de résine époxy satisfait aux conditions (a) à (e) suivantes :

(a) [A1] une résine époxy représentée par la formule générale (I) est contenue en tant que la résine époxy [A] en une quantité de 50 à 100 parties en masse dans 100 parties en masse de l'ensemble de la résine époxy, et [A1'] une résine époxy satisfaisant à une inégalité : $n \geq 2$ parmi le composant [A1] est contenue en une quantité de 50 à 80 parties en masse dans 100 parties en masse de l'ensemble de la résine époxy ;

[Formule chimique 1]

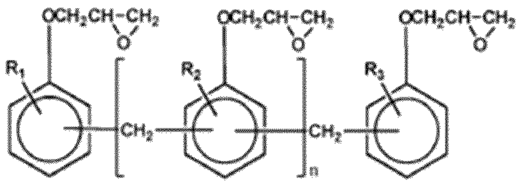

...(1)

dans la formule générale (I), $R_1$, $R_2$ et $R_3$ représentant chacun indépendamment un atome d'hydrogène ou un groupe méthyle, et n représentant un nombre entier de 1 ou plus ;
(b) l'ensemble de la résine époxy a un équivalent époxy moyen de 165 à 265 g/éq, l'équivalent époxy moyen étant mesuré comme indiqué dans la description ;
(c) un coefficient d'absorption d'eau tel que déterminé lorsque la composition de résine époxy est stockée dans une atmosphère à 85 °C et 95 % HR pendant 2 heures est de 3,0 % en masse ou moins sur la base de 100 % en masse de la composition de résine époxy, le coefficient d'absorption d'eau étant mesuré comme décrit dans la description ;
(d) [B1] une urée aromatique est contenue en tant que [B] agent de durcissement ; et
(e) la teneur en dicyandiamide [B2] de l'agent de durcissement [B] est inférieure ou égale à 0,5 partie en masse

par rapport à 100 parties en masse de l'ensemble de la résine époxy.

2. Pré-imprégné selon la revendication 1, dans lequel la teneur en dicyandiamide [B2] est de 0,2 partie en masse ou moins par rapport à 100 parties en masse de l'ensemble de la résine époxy.

3. Préimprégné selon la revendication 2, dans lequel le dicyandiamide [B2] n'est pas contenu dans la composition de résine époxy.

4. Pré-imprégné selon la revendication 3, dans lequel seule [B1] une urée aromatique est substantiellement contenue en tant que l'agent de durcissement [B].

5. Pré-imprégné selon l'une quelconque des revendications 1 à 4, dans lequel l'urée aromatique [B1] contient un composé ayant deux groupes diméthyluréido dans une molécule de l'urée aromatique.

6. Pré-imprégné selon la revendication 5, dans lequel l'urée aromatique [B1] contient un composé représenté par la formule générale (II)

[Formule chimique 2]

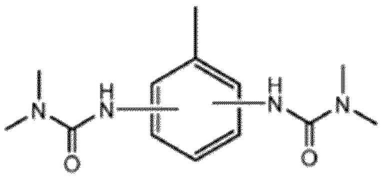

...(II)

7. Pré-imprégné selon l'une quelconque des revendications 1 à 6, dans lequel la teneur en l'urée aromatique [B1] est de 2,5 à 7,5 parties en masse par rapport à 100 parties en masse de l'ensemble de la résine époxyde.

8. Pré-imprégné selon l'une quelconque des revendications 1 à 7, dans lequel une fibre de renforcement se présente sous la forme d'un tissu tissé.

9. Pré-imprégné selon l'une quelconque des revendications 1 à 8, dans lequel la fibre de renforcement est une fibre de carbone.

10. Matériau composite renforcé de fibres comprenant le pré-imprégné selon l'une quelconque des revendications 1 à 9 qui est durci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11209580 A
- JP 2013253194 A
- JP 2013133407 A
- JP 2013166917 A